Europäisches Patentamt

European Patent Office

Office européen des brevets

(19)

(11) Numéro de publication: **0 172 040**
**B1**

(12) **FASCICULE DE BREVET EUROPEEN**

(45) Date de publication du fascicule du brevet:
05.08.87

(51) Int. Cl.⁴: **C 10 L 1/02**

(21) Numéro de dépôt: **85401133.5**

(22) Date de dépôt: **10.06.85**

(54) **Procédé de production d'une coupe d'hydrocarbures à indice d'octane élevé, par éthérification d'oléfines.**

(30) Priorité: **10.07.84 FR 8410978**

(43) Date de publication de la demande:
**19.02.86 Bulletin 86/8**

(45) Mention de la délivrance du brevet:
**05.08.87 Bulletin 87/32**

(84) Etats contractants désignés:
**BE DE GB NL**

(56) Documents cités:
**FR - A - 2 411 881**

(73) Titulaire: **INSTITUT FRANCAIS DU PETROLE, 4, Avenue de Bois-Préau, F-92502 Rueil-Malmaison (FR)**
Titulaire: **ELF FRANCE, 137, Rue de l'Université, F-75007 Paris (FR)**

(72) Inventeur: **Torck, Bernard, 33, rue Vauthier, F-92100 Boulogne-sur-Seine (FR)**
Inventeur: **Amigues, Pierre, 6, Avenue du Général de Gaulle, F-69350 La Muladière (FR)**
Inventeur: **Glaize, Yves, 4, rue de la Piscine, F-69360 St-Symphorien d'Ozon (FR)**
Inventeur: **Grangette, Henri, 12, rue des Tourelles, F-69005 Lyon (FR)**
Inventeur: **Laurent, Jean, 16, Boulevard de l'Europe, F-69600 Oullins (FR)**
Inventeur: **Fitoussi, Fred, 19, rue des Trois Pierres, F-69007 Lyon (FR)**

(74) Mandataire: **Colas des Francs, Jean, Institut Français du Pétrole 4, Avenue de Bois Préau, F-92502 Rueil-Malmaison (FR)**

ACTORUM AG

### Description

L'invention est relative à un procédé qui permet d'augmenter les indices d'octane des essences insaturées, en particulier des essences de craquage.

Du fait de la diminution prévisible pour les années à venir, des fractions lourdes dans la demande pétrolière, par suite de l'apparition de nouvelles énergies primaires, les essences de craquage constitueront à l'avenir, une part importante des essences automobile.

Par comparaison aux reformats et aux alkylats, les indices d'octane des essences de craquage sont relativement faibles (NOR clair = 90-92, NOM clair 79-80). Comme par ailleurs, la législation européenne prévoit de réduire la teneur en plomb tétraalkyles, dans un premier temps à 0,15 g pb/l et par la suite d'interdire la présence de plomb pour une partie des carburants automobile, il s'avère qu'il sera alors parfois difficile de respecter les spécifications octane du supercarburant en introduisant les essences de craquage.

Si l'on ne veut pas trop augmenter la sévérité des opérations de raffinage, il faut donc trouver des moyens pour augmenter la qualité octane de ces essences.

Ces essences de craquage sont en général, pour des besoins d'adoucissement, séparées en fractions légères et lourdes. Les essences légères de craquage contiennent une quantité importante d'oléfines, par exemple de 30 à 40%, parmi lesquelles des oléfines tertiaires, les isoamylènes, les isohexènes et les isoheptènes.

Comme dans le cas de l'isobutène, ces oléfines tertiaires peuvent être transformées en éthers par réaction avec un alcool, tel que le méthanol, en présence d'un catalyseur acide. Cette éthérification conduit aux avantages suivants: augmentation des indices d'octane de l'essence, du fait que les éthers ont des indices d'octane supérieurs à ceux des oléfines qui leur donnent naissance; diminution de la teneur en oléfine de l'essence, valorisation du méthanol en supercarburant sans aucun des problèmes dus au méthanol libre.

Les éthers les plus courants sont le MTBE (méthyl tert-butyl éther) et le TAME (méthyl tert-amyl-éther).

On sait que le réaction entre le méthanol et les oléfines tertiaires est équilibrée et qu'il est donc difficile d'obtenir des taux de conversion élevés. Par ailleurs, l'équilibre est d'autant moins déplacé vers la formation d'éthers que le poids moléculaire de l'oléfine est plus élevé. Ainsi, s'il est possible dans le cas de l'isobutène d'atteindre, par simple passage sur le catalyseur, des conversions de l'ordre de 93 à 98%, dans le cas des isoamylènes les taux de conversion restent limités à 65-75% si l'on ne désire pas mettre en œuvre des excès de méthanol trop importants.

La teneur résiduelle en méthanol à la sortie du réacteur constitue un autre problème important puisque l'introduction du méthanol libre dans un carburant n'est autorisée qu'en présence de co-solvant tel que l'alcool t-butylique.

Si l'on désire donc obtenir des taux de conversion des t-oléfines acceptables, il faut mettre en œuvre des excès de méthanol très élevés par rapport à la stœchiométrie; mais on se retrouve alors avec un effluent contenant des quantités de méthanol trop importantes pour pouvoir être enlevé facilement par des voies classiques telles que la distillation azéotropique avec des hydrocarbures et recyclage au réacteur, tel que décrit dans le brevet FR 2411881.

Si l'on veut enlever tout le méthanol par distillation azéotropique comme décrit dans le brevet cidessus, il faut donc se limiter dans le rapport molaire méthanol/oléfines mis en œuvre à l'entrée du réacteur. Le recyclage au réacteur d'une partie du distillat azéotropique pentanes pentènes méthanol comme décrit dans le brevet précité, ne conduit qu'à des conversions relativement peu élevées des isoamylènes, de l'ordre de 70%.

L'objet de la présente invention est de produire une coupe d'hydrocarbures à indice d'octane élevé.

Ce procédé est défini comme suit:

Procédé de production d'une coupe d'hydrocarbures à indice d'octane élevé à partir d'un mélange d'hydrocarbures renfermant au moins un hydrocarbure saturé, au moins une première oléfine éthérifiable ayant un nombre (n) d'atomes de carbone de 4 à 6 et au moins une seconde oléfine éthérifiable ayant un nombre d'atomes de carbone supérieur à celui de la première oléfine éthérifiable, caractérisé par les étapes suivantes:

a) on fait réagir ledit mélange d'hydrocarbures avec du méthanol au contact d'un catalyseur d'éthérification dans une première zone de réaction, de manière à former un premier mélange de réaction renfermant des éthers, des oléfines éthérifiables résiduelles et du méthanol n'ayant pas réagi,

b) on fractionne le mélange de réaction résultant par distillation en un produit de tête substantiellement débarrassé d'éther et renfermant au moins 70% du méthanol résiduel, au moins 70% de l'oléfine éthérifiable résiduelle ayant le nombre (n) d'atomes de carbone et moins de 30% de l'oléfine éthérifiable résiduelle renfermant le plus grand nombre d'atomes de carbone, et un produit de fond renfermant substantiellement tous les éthers formés à l'étape (a), moins de 30% du méthanol résiduel, moins de 30% de l'oléfine éthérifiable résiduelle ayant le nombre (n) d'atomes de carbone et au moins 70% de l'oléfine éthérifiable résiduelle ayant le plus grand nombre d'atomes de carbone,

c) on fait réagir le produit de tête avec du méthanol au contact d'un catalyseur d'éthérification, dans une seconde zone de réaction, distincte de la première zone de réaction, de manière à former un second mélange de réaction renfermant au moins un éther et du méthanol n'ayant pas réagi,

d) on sépare au moins la majeure partie du méthanol n'ayant pas réagi du second mélange de réaction,

e) on mélange au moins une partie du produit de l'étape (d) débarrassé d'au moins la majeure partie du méthanol qu'il renfermait, avec au moins une partie du produit de fond de l'étape (b), de manière à former une coupe d'hydrocarbures à indice d'octane élevé.

On peut ainsi obtenir une essence éthérifiée largement débarrassée de méthanol, directement utilisable comme carburant. L'éthérification des essences insaturées comme décrit dans la présente demande de brevet permet par ailleurs de valoriser en supercarburant des quantités plus importantes de méthanol sous forme d'éther.

Par exemple, l'essence légère de cracking catalytique a un point final de distillation qui peut être compris entre 60 et 140° C et comprend donc des hydrocarbures ayant des nombres d'atome de carbone égaux à 5, 6 et 7 parmi lesquels des oléfines possédant une double liaison tertiaire sur laquelle peut réagir le méthanol pour donner des méthyl t-alkyl éthers.

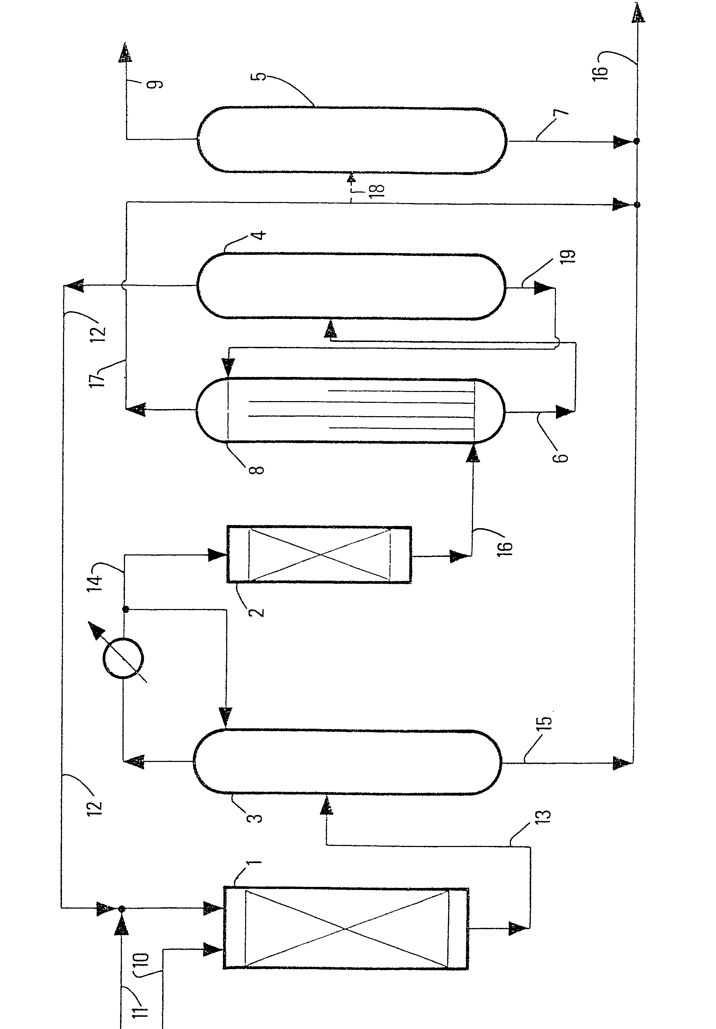

La présentation suivante, illustrée par la figure 1, permet de mieux comprendre l'invention qui peut s'appliquer soit au traitement d'une essence oléfinique soit à un mélange d'essence oléfinique et de coupe $C_4$ contenant de l'isobutène.

Dans le cas du traitement d'une essence oléfinique contenant des isooléfines $C_5$-$C_7$, l'essence 10 est injectée dans un réacteur 1, ou un ensemble incluant plusieurs réacteurs, avec du méthanol 11 en quantité telle qu'au moins 70% du méthanol restant après réaction (de préférence la totalité de ce méthanol) puisse être enlevé de l'essence par des hydrocarbures ayant un point d'ébullition inférieur à celui de l'éther résultant de l'éthérification des isoamylènes.

L'effluent du réacteur, contenant des éthers correspondant à l'éthérification des isoamylènes, des isohexènes et des isoheptènes est envoyé par la ligne 13 à une colonne à distiller 3, de manière à séparer par la ligne 14 le méthanol par azéotropie avec les hydrocarbures en $C_5$ et $C_6$ ayant un point d'ébullition inférieur à celui du TAME. On peut trouver avantage à faire fonctionner cette colonne sous pression puisque la teneur en méthanol dans les azéotropes augmente avec la pression, permettant ainsi de mettre en œuvre une quantité plus importante de méthanol à l'entrée du réacteur 1 et d'obtenir des taux de conversion des isooléfines et des quantités de méthanol transformé en éthers plus importants. Par le fond de la colonne à distiller, on soutire par la ligne 15 une partie de l'essence contenant substantiellement tous les éthers formés dans le réacteur 1 et débarrassée en partie ou de préférence en totalité du méthanol en excès.

Cette partie de l'essence peut être utilisée directement comme carburant. Dans certains cas, il est possible d'y laisser du méthanol parce que la législation concernant les carburants l'autorise ou parce que l'on dispose de co-solvants tels que définis par la législation; une partie de l'excès du méthanol peut alors sortir par la ligne 15. Dans ce cas, il est possible d'avoir une quantité de méthanol encore plus importante à l'entrée du réacteur 1.

Les hydrocarbures en $C_5$ et $C_6$ constituant avec le méthanol le distillat de la colonne 3, contiennent les isoamylènes et une partie des isohexènes qui n'ont pas réagi dans le réacteur 1. Ce distillat est envoyé par la ligne 14 dans un réacteur 2 de manière à convertir ces isooléfines en éthers et à augmenter la quantité de méthanol transformé en éther. Le taux de conversion est d'autant plus élevé que le rapport molaire méthanol/isooléfines est plus grand.

L'effluent du réacteur 2 est envoyé (ligne 16) à une section de lavage à l'eau, représentée ici par une colonne d'extraction à l'eau 8 fonctionnant à contre-courant d'eau et d'hydrocarbures. La solution du méthanol obtenue (ligne 6) est distillée dans une colonne 4; le méthanol obtenu est recyclé au réacteur 1 (ou au réacteur 2) par la ligne 12. L'eau débarrassée de méthanol sortant au fond de cette colonne est recyclée à la colonne de lavage par la ligne 19.

La fraction $C_5$ $C_6$ de l'essence contenant des éthers et débarrassée du méthanol est envoyée par la ligne 17 et mélangée avec la fraction lourde dans la ligne 16 pour être utilisée comme carburant.

Ce carburant, dont le volume a augmenté par suite de l'introduction de méthanol valorisé sous forme d'éthers, est caractérisé par des indices d'octane plus élevés que ceux de l'essence initiale.

Dans le cas où l'on traite en mélange une essence oléfinique et une coupe $C_4$ contenant de l'isobutène, le mélange est injecté au réacteur 1 avec du méthanol de préférence en quantité telle que l'excès restant après réaction puisse être enlevé par des hydrocarbures ayant un point d'ébullition qui permet de les séparer de l'éther le plus léger, le MTBE, c'est-à-dire des hydrocarbures en $C_4$ et $C_5$.

L'effluent du réacteur est donc séparé en une essence contenant du MTBE, du TAME et les éthers correspondant aux oléfines en $C_6$ et $C_7$ sortant en fond de la colonne à distiller 3 par la ligne 15, et en un distillat contenant le méthanol entraîné par azéotropie avec les hydrocarbures en $C_4$ et une partie des hydrocarbures en $C_5$. Ce distillat contenant l'isobutène et les isoamylènes qui n'ont pas réagi est envoyé par la ligne 14 dans le réacteur 2.

L'effluent de ce réacteur est envoyé à la section de lavage pour récupérer le méthanol qui est recyclé au réacteur 1. L'effluent débarrassé de méthanol est envoyé par la ligne 18 à une colonne à distiller 5 pour être séparé en fond en une coupe $C_5$ contenant du MTBE et du TAME qui est envoyée par la ligne 7 au stockage de carburant et en un distillat sortant en tête par la ligne 9 et constitué par la coupe $C_4$ débarrassée d'isobutène.

Les exemples suivants illustrent l'invention. Les parties sont en poids sauf indication contraire.

*Exemple 1* (Comparaison)

Une essence légère de cracking catalytique dont le point final de distillation est égal à 135° C, contient essentiellement des hydrocarbures en $C_5$, $C_6$ et $C_7$ parmi lesquels 7,4% en poids de méthyl-2 butènes-1 et 2, 4% d'isohexènes et 2% d'isoheptènes qui sont éthérifiables par le méthanol.

L'éthérification est mise en œuvre dans un réacteur contenant un lit fixe de résine sulfonique telle que la résine AMBERLYST 15 (marque déposée).

L'essence est introduite dans le réacteur avec du méthanol de manière que le rapport molaire méthanol sur la somme des oléfines éthérifiables soit égal à 4. La température du réacteur est maintenue à 70° C et le débit de la charge essence + méthanol est tel que la v.v.h. soit égale à 2.

L'effluent du réacteur est envoyé directement à une colonne d'extraction à l'eau, fonctionnant à contre-courant pour enlever le méthanol qui est recyclé au réacteur après séparation de l'eau par distillation. L'essence débarrassée de méthanol et dont la quantité a augmenté de 4,1% en poids par suite de l'introduction de méthanol sous forme d'éther, contient 8,3% de TAME, 3,7% de méthyl éthers d'isohexènes et 1,3% de méthyl éthers d'isoheptènes. Les taux de conversion des isopentènes, isohexènes et isoheptènes sont respectivement égaux à 80, 70 et 50%. L'augmentation d'indice d'octane recherchée obtenue par éthérification de l'essence légère est égale à 1,5.

*Exemple 2*

Cet exemple montre, par comparaison avec l'exemple 1, qu'il est possible, en effectuant l'éthérification selon le procédé décrit dans la figure, d'introduire dans l'essence plus de méthanol sous forme combinée et d'obtenir une essence ayant un indice d'octane plus élevé, tout en ayant une quantité plus faible d'essence à traiter par lavage à l'eau. 100 parts de l'essence légère de cracking catalytique identique à celle utilisée dans l'exemple 1 et 13,8 parts de méthanol sont introduites dans le réacteur 1 à 70° C de manière que la v.v.h. soit égale à 3,6. Le rapport molaire méthanol sur la somme des oléfines éthérifiables est égal à 2,3.

L'effluent du réacteur qui contient des oléfines éthérifiables résiduelles est envoyé par la ligne 13 à la colonne à distiller 3 fonctionnant sous 8 bars abs. On soutire en fond 56,5 parts d'une essence débarrassée de méthanol et qui renferme 95% des oléfines $C_7$ résiduelles éthérifiables et 3% des oléfines $C_5$ résiduelles éthérifiables.

Le distillat sortant en tête est constitué de 47 parts de fractions légères de l'essence et de 10 parts de méthanol. Il renferme 97% des oléfines $C_5$ éthérifiables et 5% des oléfines $C_7$ éthérifiables.

Ce distillat substantiellement débarrassé d'éther est envoyé par la ligne 14 dans le réacteur 2 avec une v.v.h. égale à 2,2. La température du réacteur est maintenue à 70° C. Dans ce réacteur la majeure partie des isoamylènes restants est convertie en TAME avec un taux de conversion élevé du fait du rapport molaire méthanol sur isoamylènes élevé (8,2) à l'entrée de ce réacteur.

L'effluent du réacteur est envoyé à la colonne d'extraction à l'eau pour enlever le méthanol (9,1 parts) qui est recyclé au réacteur 1 après distillation dans la colonne 4. L'essence débarrassée de méthanol sortant par la ligne 17 est mélangée dans la ligne 15 avec l'essence soutirée en fond de la colonne 3 et contenant des éthers et des hydrocarbures en $C_6$ et $C_7$. On récupère ainsi 104,7 parts d'essence. La quantité de méthanol 4,7 parts, introduites sous forme d'éthers, est plus importante que dans le cas de l'exemple 1.

Par ailleurs, la conversion globale des isoamylènes est égale à 93,6%. Les conversions des isohexènes et isoheptènes sont respectivement égales à 65 et 40%. L'essence débarrassée de méthanol sortant par la ligne 16 contient 9,6% de TAME, 4,3% de méthyl éther d'isohexènes et 1% de méthyl éther d'isoheptènes.

L'augmentation d'indice d'octane recherchée obtenue par éthérification de l'essence est dans ce cas égale à 2, donc supérieure à celle obtenue dans l'exemple 1, bien que la quantité de méthanol mise en œuvre pour effectuer la réaction ait été plus faible.

*Exemple 3*

Cet exemple montre qu'il est possible et même avantageux d'éthérifier dans une même unité, une essence légère de cracking catalytique et une coupe $C_4$ obtenue dans une unité de cracking catalytique.

On constate que l'on introduit dans l'essence plus de méthanol sous forme combinée et que l'augmentation d'octane est également plus élevée.

100 parts de la même essence légère de cracking catalytique, 80 parts d'un mélange de coupe $C_4$ de cracking catalytique et d'une coupe $C_4$ de vapocraquage, contenant 25% d'isobutène, et 21,9 parts de méthanol sont introduits à 70° C dans le réacteur 1 contenant une résine sulfonique comme catalyseur de manière que la v.v.h. soit égale à 2,8.

L'effluent du réacteur, renfermant les oléfines résiduelles éthérifiables, est envoyé par la ligne 13 dans la colonne 3 fonctionnant sous 8 bars abs. On soutire en fond 105 parts d'une essence débarrassée de méthanol et contenant du MTBE, du TAME et des éthers en $C_7$ et $C_8$. Cette essence renferme 99% des oléfines $C_7$ résiduelles éthérifiables et 2% de l'isobutène résiduel.

Le distillat sortant en tête (1% des oléfines $C_7$ résiduelles éthérifiables et 98% de l'isobutène résiduel) est constitué de 90,8 parts d'hydrocarbures légers et 7,2 parts de méthanol. Ce distillat est envoyé à 70° C par la ligne 14 au réacteur 2 avec une v.v.h. égale à 2,4. Dans ce réacteur l'isobutylène et les isoamylènes restants sont transformés en éthers avec des taux de conversions élevés du fait du rapport molaire méthanol sur oléfines éthérifiables élevé (3,3) à l'entrée du réacteur.

L'effluent de ce réacteur est envoyé à la colonne d'extraction à l'eau pour enlever le méthanol (5,5 parts) qui est recyclé au réacteur 1. Cet effluent est ensuite envoyé par la ligne 17 puis 18 à la colonne à distiller 5 de manière à séparer les $C_4$ (62 parts) d'une essence $C_5$ contenant du MTBE et du TAME. Cette essence $C_5$ est mélangée par la ligne 27 avec l'essence sortant de la colonne 3 par la ligne 15. On récupère ainsi 136 parts d'une essence débarrassée de méthanol et contenant 23,4% en poids de MTBE, 7,4% de TAME, 3,3% de méthyl éther d'isohexènes et 0,97% de méthyl éther d'isoheptènes.

Les taux de conversion globaux de l'isobutène, des isoamylènes, des isohexènes et des isoheptènes sont respectivement égaux à 99,6 - 87,2 - 50 et 40%. L'augmentation d'indice d'octane recherchée de l'essence, obtenue par éthérification conjointe de l'essence et d'une coupe $C_4$, est dans ce cas égale à 8.

La quantité de méthanol introduite sous forme d'éthers représente 11,9% de l'essence obtenue.

*Exemple 4*

100 parts d'une fraction de distillation de l'effluent d'une unité de cracking catalytique, bouillant entre −12° C et 60° C, contenant des hydrocarbures en $C_4$, $C_5$ et $C_6$ parmi lesquels 6,7% d'isobutène, 12,5% d'isoamylènes et 0,45% d'isohexènes, sont envoyées dans un réacteur contenant une résine sulfonique DUOLITE C 23 (marque déposée). Cette fraction est introduite dans le réacteur à 70° C avec 15,6 parts de méthanol de manière que le rapport molaire méthanol sur la somme des oléfines éthérifiables soit égal à 1,61. Le débit de charge totale est fixé pour que la v.v.h. soit égale à 2,9.

L'effluent du réacteur est envoyé à la colonne de distillation 3 fonctionnant sous 8 bars abs. On soutire en fond 30,5 parts d'une fraction débarrassée de méthanol contenant 33% de MTBE, 42% de TAME, 1% de méthyl éther d'isohexènes, 90% des oléfines $C_6$ éthérifiables résiduelles et 4% de l'isobutène résiduel. En tête de colonne, on soutire 85,4 parts de fraction légère contenant 9,3% de méthanol entraîné par azéotropie et le reste des hydrocarbures. Ce distillat est envoyé avec une v.v.h. égale à 2,1 dans le réacteur 2 contenant la même résine maintenue à 70° C.

Dans ce réacteur l'isobutène et les isoamylènes non transformés sont éthérifiés par le méthanol avec des taux de conversion élevés du fait du rapport molaire méthanol sur oléfines élevé à l'entrée du réacteur. L'effluent de ce réacteur est envoyé à la colonne d'extraction à l'eau pour enlever le méthanol (7,9 parts) qui est recyclé au réacteur 1 après séparation dans la colonne 4. L'effluent débarrassé du méthanol est envoyé par les lignes 17 et 18 à la colonne 5 de manière à séparer les $C_4$ (38 parts) d'une essence contenant du MTBE et du TAME.

Cette essence est mélangée par la ligne 7 avec celle sortant de la colonne 3 par la ligne 15. On obtient ainsi 71 parts d'une essence débarrassée de méthanol et contenant 15% de MTBE, 23,8% de TAME et 0,41% de méthyl éther d'isohexènes.

Les taux de conversion globaux de l'isobutène, des isoamylènes et des isohexènes sont respectivement égaux à 99,7, 92,5 et 50%.

L'augmentation d'indice d'octane recherchée de la coupe $C_5^+$ de cette fraction de distillation est égale à 6,5.

La quantité de méthanol introduite sous forme d'éthers représente 13% de l'essence obtenue.

## Revendications

1. Procédé de production d'une coupe d'hydrocarbures à indice d'octane élevé à partir d'un mélange d'hydrocarbures renfermant au moins un hydrocarbure saturé, au moins une première oléfine éthérifiable ayant un nombre (n) d'atomes de carbone de 4 à 6 et au moins une seconde oléfine éthérifiable ayant un nombre d'atomes de carbone supérieur à celui de la première oléfine éthérifiable, caractérisé par les étapes suivantes:

a) on fait réagir ledit mélange d'hydrocarbures avec du méthanol au contact d'un catalyseur d'éthérification dans une première zone de réaction de manière à former un premier mélange de réaction renfermant des éthers, des oléfines éthérifiables résiduelles et du méthanol n'ayant pas réagi,

b) on fractionne le mélange de réaction résultant par distillation en un produit de tête substantiellement débarrassé d'éther et renfermant au moins 70% du méthanol résiduel, au moins 70% de l'oléfine éthérifiable résiduelle ayant le nombre (n) d'atomes de carbone et moins de 30% de l'oléfine éthérifiable résiduelle renfermant le plus grand nombre d'atomes de carbone, et un produit de fond renfermant substantiellement tous les éthers formés à l'étape (a), moins de 30% du méthanol résiduel, moins de 30% de l'oléfine éthérifiable résiduelle ayant le nombre (n) d'atomes et au moins 70% de l'oléfine éthérifiable résiduelle ayant le plus grand nombre d'atomes de carbone,

c) on fait réagir le produit de tête avec du méthanol, au contact d'un catalyseur d'éthérification, dans une seconde zone de réaction, distincte de la première zone de réaction, de manière à former un second mélange de réaction renfermant au moins un éther et du méthanol n'ayant pas réagi,

d) on sépare au moins la majeure partie du méthanol n'ayant pas réagi du second mélange de réaction, et

e) on mélange au moins une partie du produit de l'étape (d), débarrassé d'au moins la majeure partie du méthanol qu'il renfermait, avec au moins une partie du produit de fond de l'étape (b), de manière à former une coupe d'hydrocarbures à indice d'octane élevé.

2. Procédé selon la revendication 1, dans lequel la première oléfine éthérifiable renferme 5 atomes de carbone.

3. Procédé selon la revendication 2, dans lequel le mélange d'hydrocarbures est une coupe essentiellement $C_5$-$C_7$.

4. Procédé selon la revendication 1, dans lequel la première oléfine éthérifiable renferme 4 atomes de carbone et dans lequel au moins la majeure partie des hydrocarbures renfermant 4 atomes de carbone, présents dans le second mélange de réaction à la fin de l'étape (c), sont enlevés de ce mélange avant de procéder à l'étape (e).

5. Procédé selon l'une quelconque des revendications 1 à 4, dans lequel l'étape (d) est réalisée par lavage à l'eau, la solution aqueuse de méthanol obtenue est distillée, on recycle le méthanol ainsi séparé à l'étape (a) ou à l'étape (c) et l'eau récupérée à l'étape (d).

## Patentansprüche

1. Verfahren zur Herstellung einer Kohlenwasserstofffraktion mit einer erhöhten Oktanzahl, aus einer Kohlenwasserstoffmischung, die wenigstens einen gesättigten Kohlenwasserstoff, wenigstens ein primäres veretherbares Olefin mit 4 bis 6 (n) Kohlenstoffatomen und wenigstens ein zweites veretherbares Olefin mit einer Anzahl von Kohlenstoffatomen aufweist, die grösser als dien des ersten veretherbaren Olefins ist, gekennzeichnet durch die folgenden Verfahrensstufen:

a) man lässt die besagte Kohlenwasserstoffmischung mit Methanol in Kontakt mit einem Veretherungskatalysator in einer ersten Reaktionszone derart reagieren, dass sich eine erste Reaktionsmischung, enthaltend Ether, veretherbare Restolefine und nicht umgesetztes Methanol, bildet,

b) man fraktioniert die Reaktionsmischung, durch deren Destillation ergibt sich ein im wesentlichen von Ether befreiter Vorlauf, enthaltend mindestens 70% Restmethanol, mindestens 70% des veretherbaren Restolefins mit (n) Kohlenstoffatomen und weniger als 30% des veretherbaren Restolefins mit der höheren Anzahl von Kohlenstoffatomen und ein Bodenprodukt, im wesentlichen enthaltend sämtliche in der Verfahrensstufe (a) gebildeten Ether, weniger als 30% Restmethanol, weniger als 30% veretherbare Restolefine mit (n) Atomen und mindestens 70% veretherbarer Restolefine mit der höheren Anzahl von Kohlenstoffatomen,

c) man lässt den Vorlauf mit Methanol in Kontakt mit einem Veretherungskatalysator in einer zweiten von der ersten sich unterscheidenden Reaktionszone, reagieren, so dass sich eine zweite Reaktionsmischung, enthaltend mindestens einen Ether und nicht umgesetztes Methanol, bildet,

d) man trennt mindestens den Hauptanteil des nicht umgesetzten Methanols aus der zweiten Reaktionsmischung ab und

e) man mischt mindestens einen Teil des Produktes aus Stufe (d), welches von mindestens dem Hauptteil des enthaltenen Methanols befreit wurde, derart mit mindestens einem Teil des Bodenproduktes aus Stufe (b), dass sich eine Kohlenwasserstofffraktion mit einer erhöhten Oktanzahl bildet.

2. Verfahren nach Anspruch 1, in dem das primäre veretherbare Olefin 5 Kohlenstoffatome enthält.

3. Verfahren nach Anspruch 2, in dem die Kohlenwasserstoffmischung ein im wesentlichen $C_5$-$C_7$ enthaltener Schnitt ist.

4. Verfahren nach Anspruch 1, in dem das erste veretherbare Olefin 4 Kohlenstoffatome enthält und in dem mindestens der Hauptanteil der 4 Kohlenstoffatome enthaltenden Kohlenwasserstoffe, die in der zweiten Reaktionsmischung am Ende der Verfahrensstufe (c) vorliegen, aus dieser Mischung vor Durchführung der Stufe (e) entfernt werden.

5. Verfahren nach einem der Ansprüche 1 bis 4, in dem die Stufe (d) durch Waschen mit Wasser durchgeführt wird, die erhaltene wässerige Methanollösung destilliert wird, und das so abgetrennte Methanol in die Stufen (a) oder (c) und das abgetrennte Wasser in Stufe (d) rezykliert werden.

## Claims

1. A process for producing a hydrocarbon cut of high octane number from a mixture of hydrocarbons comprising at least one saturated hydrocarbon, at least one first etherifiable olefin having a number (n) of carbon atoms from 4 to 6 and at least one second etherifiable olefin having a number of carbon atoms higher than that of the first etherifiable olefin, characterized by the following steps of:

a) reacting said hydrocarbons mixture with methanol in the presence of an etherification catalyst in a first reaction zone so as to form a first reaction mixture comprising ethers, residual etherifiable olefins and unreacted methanol,

b) fractionating the resultant reaction mixture, by distillation, to a top product substantially free of ether and containing at least 70% of the residual methanol, at least 70% of the residual etherifiable olefin having (n) carbon atoms and less than 30% of the residual etherifiable olefin of higher number of carbon atoms, and to a bottom product containing substantially all the ethers formed in step (a), less than 30% of the residual methanol, less than 30% of the residual etherifiable olefin of (n) carbon atoms and at least 70% of the residual etherifiable olefin of higher number of carbon atoms,

c) reacting the top product with methanol, in the presence of an etherification catalyst, in a second reaction zone separate from the first reaction zone, so as to form a second reaction mixture containing at least one ether and unreacted methanol, d) separating at least the major part of the unreacted methanol from the second reaction mixture, and, e) admixing at least part of the product from step (d), free of at least the major part of its methanol content, with at least a part of the bottom product from step (b), so as to form a hydrocarbon cut of high octane number.

2. A process according to claim 1, wherein the first etherifiable olefin contains 5 carbon atoms.

3. A process according to claim 2, wherein the hydrocarbons mixture is an essentially $C_5$-$C_7$ cut.

4. A process according to claim 1, wherein the first etherifiable olefin contains 4 carbon atoms and wherein at least the major part of the hydrocarbons containing 4 carbon atoms, present in the second reaction mixture at the end of step (c), are removed from said mixture before carrying out step (e).

5. A process according to any of claims 1 to 4, wherein step (d) is performed by water washing, the obtained methanol aqueous solution is distilled, the so-separated methanol is recycled to step (a) or to step (c) and the recovered water to step (d).